# EUROPÄISCHE PATENTSCHRIFT

(11) **EP 2 707 446 B1**
(45) Veröffentlichungstag und Bekanntmachung des Hinweises auf die Patenterteilung: **29.04.2020**
(21) Anmeldenummer: 11719014.0
(22) Anmeldetag: 11.05.2011
(51) Int. Cl.: C09K 3/10, B65D 41/04, C08K 5/00

(54) **PVC-FREIE VERSCHLÜSSE**
PVC-FREE CLOSURES
FERMETURES SANS PVC

(43) Veröffentlichungstag der Anmeldung: 19.03.2014
(60) Teilanmeldung: 20162703.1
(73) Patentinhaber: Actega DS GmbH, 28219 Bremen (DE)
(72) Erfinder: MÄNGEL, Dany, 27239 Twistringen (DE)
(74) Vertreter: Maiwald, Walter
(86) Internationale Anmeldenummer: PCT/EP2011/057651
(87) Internationale Veröffentlichungsnummer: WO 2012/152329

(56) Entgegenhaltungen:
- EP-A1- 2 058 379
- EP-A1- 2 223 984
- WO-A1-2011/060803
- JP-A- 2000 239 481
- JP-A- 2002 265 709
- US-A1- 2010 006 532
- US-B1- 6 677 397
- Actega DS: "THE PVC-FREE SOLUTION; SAFE, SECURE, RELIABLE", , 19. August 2010 (2010-08-19), XP002669289, Gefunden im Internet: URL:http://www.actega.de/fileadmin/ACTEGA/ downloads/ds/provalin/Provalin_Folder_fin. pdf
- Lyondellbasell: "Adflex KS 084 P, Technical DataSheet", , 19 August 2018 (2018-08-19), XP055516373, Retrieved from the Internet: URL:https://omnexus.specialchem.com/produc t/e-lyondellbasell-adflex-ks-084-p [retrieved on 2018-10-17]
- Wikipedia: "Ethylene-vinyl acetate", , 13 September 2018 (2018-09-13), XP055516380, Retrieved from the Internet: URL:https://en.wikipedia.org/wiki/Ethylene -vinyl_acetate [retrieved on 2018-10-17]
- Anonymous: "Thermoplastic Elastomer (TPE) FAQs | PolyOne", , 31 January 2016 (2016-01-31), XP055628852, Retrieved from the Internet: URL:https://www.polyone.com/products/therm oplastic-elastomers/tpe-knowledge-center/t pe-faqs [retrieved on 2019-10-04]

## Beschreibung

### 1. Technisches Gebiet

Die vorliegende Erfindung betrifft einen Gefässverschluss aus Metall oder Kunststoff für ein Gefäss zur Aufnahme von Nahrungsmitteln oder Getränken, mit einer Dichtungseinlage aus einem Dichtungsmaterial, das wenigstens drei Polymere im Gemisch mit weiteren Substanzen umfasst. Die Erfindung betrifft weiterhin die Verwendung des Gefässverschlusses, eine Dichtungseinlage umfassend ein Dichtungsmaterial wie vorstehend erwähnt, und ein Gefäss mit einem erfindungsgemässen Gefässverschluss.

### 2. Hintergrund der Erfindung

Seit langem werden in der Verpackungsindustrie Dichtungsmaterialien für Gefäßverschlüsse verwendet, die Polyvinylchlorid (PVC) enthalten.

Die Verwendung von PVC-haltigen Zusammensetzungen in Verpackungsmaterialien ist jedoch generell aus vielerlei Gründen nicht mehr erwünscht. So entstehen bei der Verbrennung von Haushaltsabfall aus Halogenkunstoffen säurehaltige Gase, deren Entweichen in die Atmosphäre schädlich ist. Zudem stören schon geringe Mengen PVC das werkstoffliche Recycling von Kunststoffabfällen. Überdies erfordern PVC-basierte Dichtungselemente den Einsatz von Weichmachern, die ggf. in die im Gefäß enthaltenen Nahrungsmittel migrieren können und deshalb aus gesundheitlichen Gründen bedenklich sind.

Aufgabe der vorliegenden Erfindung ist die Bereitstellung einer PVC-freien Zusammensetzung (nachfolgend auch als Polymercompound bezeichnet) für Gefäßverschlüsse, insbesondere für die Verpackung von Nahrungsmitteln. Nahrungsmittel (einschließlich Getränken wie Säfte und dergleichen) werden oft in Gefäße aus Glas oder Kunststoff verpackt, die in vielen Fällen dann einen Schraubdeckel haben. Schraubdeckel steht hier stellvertretend für Gefäßverschlüsse, die im befüllten und verschlossenen Zustand in einem Gewindeeingriff mit dem Gefäß stehen. Zur Öffnung des Gefäßes muss der Verschluss diesem gegenüber verdreht werden, wobei sich die Dichtung des Verschlusses vom Gefäßrand abhebt und das - oft - bestehende Vakuum im Gefäß aufgehoben wird. Der Verschluss kann durch eine solche Verdrehung vom Gefäß getrennt werden. Die bekannten PVC-haltigen Dichtungsmaterialien haben die hierfür nötigen Verarbeitungs- und Gebrauchseigenschaften. Es ist also zu beachten, dass eine PVC-freie Dichtungsmasse nur dann ein kommerziell interessantes Dichtungsmaterial für Gefäßverschlüsse darstellt, wenn die PVC-freie Dichtungsmasse ganz spezifische physiko-chemische Eigenschaften aufweist, die denen von PVC-haltigen Dichtungsmaterialien nicht nachstehen.
Stülpdeckel (z.B. für Senfgläser) bzw. Einmaldeckel, z.B. crimp-on Deckel, die auf Glasbehältern mit großen Durchmessern verwendet werden, sind ebenfalls Verschlüsse im Sinne dieser Erfindung.

Speziellere Anforderungen umfassen beispielsweise folgende Aspekte:
- Die stoffliche Zusammensetzung soll so gewählt sein, dass unerwünschte Substanzen vermieden werden. Daher soll die Dichtungsmasse solche Substanzen nicht enthalten, die als gesundheitlich bedenklich eingestuft werden, insbesondere Weichmacher wie z.B. Phthalate; Semicarbazid und dessen Quellen, insbesondere ADC und OBSH; 2-Ethylhexansäure und deren Quellen; zinnorganische Verbindungen; primäre aromatische Amine; Bisphenole, Nonylphenol; BADGE; Photoinitiatoren; perhalogenierte Verbindungen; Melamin.
   Für einige Anwendungszwecke ist die Anwesenheit größerer Gehalte an (bei RT) flüssigen Substanzen unerwünscht. Dann sollte der Gehalt solcher Substanzen (wie z.B. Weißöl) auf maximal 10 %, vorzugsweise weniger beschränkt sein und in manchen Fällen sollte die Dichtungsmasse keine nachweisbaren Gehalte an solchen flüssigen Substanzen haben.
   Für den Fall, daß Bisphenol-A und Melamin vermieden werden soll, werden für den Gefäßverschluss Lacke eingesetzt, die solche Substanzen nicht enthalten. Dann sollte das Dichtungsmaterial so zusammengesetzt sein, dass mit solchen Lacken eine dauerhafte Verklebung erreicht wird.
   Die stoffliche Zusammensetzung sollte so gewählt sein, dass das Dichtungsmaterial beim Einsatz auch anspruchsvollen Anforderungen genügt.
   So sollte das Dichtungsmaterial unter Pasteurisierungs- oder sogar Sterilisierungsbedingungen verwendbar sein, also einer Pasteurisierung (bis zu 98 °C) oder einer Sterilisierung (generell oberhalb 100 °C, oft oberhalb 105 °C oder oberhalb 110 °C, oder sogar oberhalb 120 °C, bis herauf zu 132 °C) standhalten.
   Für manche Einsatzzwecke sollte das Dichtungsmaterial eine Barrierefunktion haben, also das Eindringen unerwünschter Substanzen in das Gefäß verringern oder verhindern.
   Für spezielle Anwendungen sollte es möglich sein, das Dichtungsmaterial mit absorbierenden Zusätzen (z.B. Sauerstoffabsorber) oder Scavenger-Substanzen auszustatten.
- Das Dichtungsmaterial muss die benötigten Verarbeitungseigenschaften aufweisen.
   Grundsätzlich muss es sich thermisch ausreichend erweichen lassen, um (insbesondere für Extrusion mit anschließender Verstempelung bzw. Formpressen aber auch im Spritzgussverfahren) auf üblichen Verarbeitungsmaschinen einsetzbar zu sein.
   Es muss dennoch nach der Einbringung in den Gefäßverschluss und Abkühlung auf die gewünschte Anwendungstemperatur (meist RT, aber gegebenenfalls auch bei niedrigeren Temperaturen, z.B. im Kühlregal) die erforderlichen Dichtungseigenschaften haben.
   Für kleine Gefäßverschlüsse muss sich das Dichtungsmaterial auch vollflächig einbringen lassen.
   Für PT-Kappen (Press-on Twist-off® Verschlüsse) muss das Dichtungsmaterial sowohl die Dichtung als auch das Innengewinde der Kappe ausbilden, und muss sich daher (als sog. "konturierter Ring") sowohl auf die Innenfläche als auch die Schürze der Kappe auftragen lassen, und beim Aufpressen der Kappe die Gewindeelemente ausbilden können.
   Für manche Anwendungen sollte das Dichtungsmaterial sich "out shell", d. h. außerhalb des Verschlusses zur Dichtungseinlage formen lassen, die dann als fertiger Dichtungsring oder dergleichen in den Gefäßverschluss eingesetzt wird.
   Das Dichtungsmaterial soll sich insbesondere für Metall-Verschlüsse, und Metall-Kunststoffverbünde, eignen, die gegebenenfalls innenlackiert sind, es soll sich aber auch für Kunststoff-Verschlüsse eignen.
- Das Dichtungsmaterial muss sich für übliche Lebensmittel-Verpackungen eignen.
   Die Dichtungseinlage muss sich pasteurisieren lassen (bis zu 98 °C oder auch mehr) und sollte sich vorzugsweise auch sterilisieren lassen (bis zu 132 °C).
   Die Dichtungseinlage muss einer Nachbehandlung (Pasteurisation und dergleichen) bei Gegendruck und Evakuierung standhalten; falls nötig, muss sie eine Vakuums-Retention und gegebenenfalls Barriereeigenschaften aufweisen.
   Die Dichtungseinlage soll sich für übliche Gefäße aus Metall, Kunststoff, Glas usw. eignen.
   Im Kontakt mit dem Füllgut, insbesondere bei fetthaltigen Lebensmitteln, alkoholischen Getränken und anderen Produkten mit (im Vergleich mit Wasser) lipophilem Charakter soll die Dichtungseinlage keine bzw. möglichst wenig Komponenten an das Füllgut abgeben.
   Die Dichtungseinlage muss ausreichend niedrige Aufdrehwerte zeigen, um den Gefäßverschluss (gegebenenfalls bei Kühlung) mit angemessener Kraft entfernen zu können. Gleichzeitig muss die Dichtung über die vorgesehene Lebensdauer (Mindesthaltbarkeit) des Lebensmittels ihre Dichtungswirkung zeigen.

Die der vorliegenden Erfindung zu Grunde liegenden Aufgaben werden durch die in den unabhängigen Ansprüchen definierten PVC-freien Zusammensetzungen gelöst. Vorteilhafte Ausgestaltungen sind in Unteransprüchen definiert.

### 3. Zusammenfassung der Erfindung

Generell werden erfindungsgemäß Polymercompounds als Dichtungsmaterial oder Dichtungsmasse eingesetzt. Unter einem Compound wird dabei ein Stoffgemisch verstanden, das neben wenigstens einem Polymer weitere Substanzen umfasst. Dabei kann es sich z.B. um andere Polymere, Streckmittel, Gleitmittel, Antioxidantien, Pigmente und andere Zusatzstoffe handeln.

Die erfindungsgemäßen PVC-freien Zusammensetzungen können durch Erwärmung ausreichend fließfähig gemacht werden. Nur so kann die Dichtungsmasse durch Extrusion oder ein ähnliches Verfahren im Bereich des zu erzeugenden Dichtungselementes auf den Gefäßverschluss-Rohling aufgetragen werden.

Nachfolgend kann die auf der Innenseite des Gefäßverschlusses aufgebrachte PVC-freie Zusammensetzung mechanisch zum gewünschten Dichtungselement geformt werden. Nach Abkühlung kann die aufgetragene Zusammensetzung ihre Form beibehalten und im Schließzustand dichtend an der Öffnung des mit dem Gefäßverschluss zu verschließenden Gefäßes anliegen.

Dabei kann die PVC-freie Zusammensetzung vorzugsweise bei der Herstellung beliebiger Gefäßverschlüsse verwendet werden, wie zum Beispiel zur Herstellung von Dichtungen in Nockendrehverschlüssen, Schraubdeckeln, drehbare Kronkorken, Flaschenschraubverschlüssen und Press-on Twist-off® Verschlüssen.

Die erfindungsgemäße PVC-freie Zusammensetzung ist also insbesondere ein für Gefäßverschlüsse geeignetes Dichtungsmaterial, welches
- einfach zu verarbeiten ist,
- in der industriellen Produktion schnelle Durchsätze ermöglicht,
- bei Pasteurisierbedingungen und/oder bei Sterilisationsbedingungen einsetzbar ist,
- selbst bei fetthaltigen Füllgütern gesundheitlich unbedenklich ist,
- weitestgehend oder völlig auf unvernetzten Polymeren basiert und ganz oder jedenfalls im wesentlichen frei von gesundheitlich bedenklichen Substanzen (wie Weichmachern und dergleichen) ist,
- kostengünstig ist, und/oder
- die Herstellung von Gefäßverschlüssen erlaubt, die im Schließzustand eine Gasbarrierewirkung, eine Überdruckventilwirkung und/oder eine Vakuumretention zeigen.

Generell umfasst ein erfindungsgemäßes Dichtungsmaterial ein Gemisch chemisch unterschiedlicher Komponenten, das wenigstens drei verschiedene Polymere und weitere Bestandteile wie Gleitmittel, Stabilisatoren und gegebenenfalls weitere Bestandteile umfasst, die zur Einstellung der gewünschten Gebrauchseigenschaften dienen.

Ein spezielles Anwendungsgebiet der Erfindung sind die z. B. für Babynahrung sehr beliebten Press-on Twist-off® Verschlüsse.

Definitionsgemäß handelt es sich bei einem *"Press-on Twist-off*® *Verschluss"* um einen Verschluss, der beim erstmaligen Aufbringen auf das zu verschließende Gefäß aufgedrückt wird ("*Press-on*"), beim Entfernen jedoch gedreht werden muss ("*Twist-off").* Dies steht im Gegensatz zu Schraubverschlüssen, die sowohl beim Verschließen des Gefäßes als auch beim Öffnen des Gefäßes einer Drehbewegung bedürfen.

Das Grundprinzip von Press-on Twist-off® Gefäßverschlüssen ist zum Beispiel in der 1966 publizierten Patentschrift US 3,270,904 beschrieben:
An den Seitenwänden des Gefäßverschlusses wird eine Kunststoffmasse aufgebracht, die sich beim Verschließen des Gefäßes derart verformt, dass Gewindegänge gebildet werden, welche mit den Gewindeelementen des Gefäßes zusammenwirken (vgl. Spalte 2, Zeile 16 von US 3,270,904). Im Gegensatz zu Schraubkappen und Nocken-Drehverschlüssen hat der (metallene) Grundkörper des Gefäßverschlusses selbst kein Gewinde; das Gewinde wird ausschließlich vom Polymermaterial der Dichtungsmasse gebildet. Auf Grund der beim Aufpressen des Gefäßverschlusses gebildeten Gewindegänge wird eine Drehbewegung zur Entfernung des Gefäßverschlusses zwingend notwendig. Die auf der Innenseite des Gefäßverschlusses aufgebrachte Kunststoffmasse erfüllt bei einem Press-on Twist-off® Gefäßverschluss (in US 3,270,904 als Press-on Turn-off Cap bezeichnet) also sowohl eine Dichtungs- wie auch eine Haltefunktion (vgl. die in Spalte 2, Zeilen 4-10 von US 3,270,904 beschriebene *"dual function*")*.*

Bisher werden immer noch auf PVC basierende Compounds für solche Gefäßverschlüsse industriell verwendet.

Obschon die grundsätzliche Funktionsweise von Press-on Twist-off® Gefäßverschlüssen seit Jahrzehnten bekannt ist, stellt deren kostengünstige (d.h. schnelle) Herstellung für die Verpackungsindustrie bis heute eine beachtliche Herausforderung dar. Dem Fachmann stellen sich dabei insbesondere folgende Aufgaben:
- Die auf die Innenseite des Gefäßverschlusses aufgetragene Dichtungsmasse kommt zwingend mit den sich im zu verschließenden Gefäß befindlichen Nahrungsmitteln in Kontakt. Angesichts dessen, dass die Migration von Bestandteilen der Dichtungseinlage des Gefäßverschlusses in das Nahrungsmittel nicht nur unerwünscht, sondern auch durch gesetzliche Bestimmungen stark reglementiert ist (vgl. 1. Absatz auf Seite 15 der Beschreibung der vorliegenden Anmeldung), ist die Auswahl der im Prinzip denkbaren Dichtungsmaterialien von vornherein eingeschränkt. Ein Ersatz für PVC-Compounds wird seit Jahren vergeblich gesucht.
   Für Babynahrung eignen sich bevorzugt Melamin-freie Verpackungen. Oft müssen die entsprechenden Gefäßverschlüsse mit Innen-Lackierungen versehen werden, die dann Melamin-frei sein müssen. Geeignet sind z.B. Polyester-Lacke. Das Dichtungsmaterial muss dann auf solchen Lacken ausreichend haftfähig sein.
- Das auf der Innenseite der Deckplatte angebrachte Dichtungsmaterial dient der hermetischen Abdichtung des zu verschließenden Gefäßes, d.h. hat zwingend eine Dichtungsfunktion. Im Gegensatz dazu dient das an den Seitenwänden des Gefäßverschlusses angebrachte Dichtungsmaterial der Zusammenwirkung mit den Gewindeelementen, insbesondere beim Aufdrehen, und hat somit überwiegend eine Hebelfunktion (vgl. Fig. 2 von US 3,270,904). Angesicht dieser unterschiedlichen Funktionen würde es sich anbieten, zwei unterschiedliche Materialen mit auf die jeweilige Funktion zugeschnittenen Materialeigenschaften zu verwenden. Eine solche Ausführungsform wäre aber nur unter großem Aufwand herstellbar und ist deshalb unter wirtschaftlichen Gesichtspunkten gänzlich uninteressant. Die gewünschten hohen Produktionsgeschwindigkeiten werden nur dann erreicht, wenn das Material auf der Innenseite der Deckplatte und an den Seitenwänden des Gefäßverschlusses dasselbe ist.
- Für die Dichtungsfunktion wird ein zumindest teilweise elastisches Material benötigt, das die erforderliche Anschmiegung an den Gefäßrand, die Vakuums-Retention, gegebenenfalls auch eine Barrierewirkung gegenüber dem Eintritt von Schadstoffen, Sauerstoff und dergleichen bewirken kann.
- Im Gegensatz dazu wird für die Haltefunktion ein eher steifes/hartes Material benötigt, da der Gefäßverschluss ansonsten ohne Drehbewegung abgehoben werden könnte oder die Gewindeelemente des Verschlusses den Aufdrehkräften nicht standhalten. Die Verwendung desselben Materials sowohl für die Haltefunktion wie auch für die Dichtfunktion stellt für den Fachmann somit eine große Herausforderung dar.
- Das Dichtungsmaterial muss sich, insbesondere durch Stempelung oder Einbringung durch Spritzguß, im Verschluss-Rohling in die benötigte Form bringen lassen. Dabei muss nicht nur der Dichtungsring ausgebildet werden, der im verschlossenen Zustand des Behälters dichtend am Behälter-Öffnungsrand anliegt. Gleichzeitig muss auch das Material, welches beim Aufpressen des Verschlusses dessen Innengewinde ausbildet, an der inneren Seitenwand (Schürze) des Verschlusses verteilt werden. Dazu muss das ausreichend erwärmte, fließfähige Compound bei der Stempelungstemperatur seitlich um den Stempel herum gleichmäßig in den Raum zwischen dem Stempel und der Seitenwand des Verschlusses fließen können.
- Die Wahl des passenden Dichtungsmaterials wird weiterhin durch die erforderlichen thermischen Eigenschaften erschwert. Beim Aufbringen des Deckels muss das Dichtungsmaterial genügend verformbar sein, um die Gewindeelemente des zu verschließenden Behälters auszubilden. Dennoch muss das Dichtungsmaterial Pasteurisier- und/oder Sterilisationsbedingungen aushalten und darf deshalb z. B. nur eingeschränkt fließfähig sein.

Es zeigt sich unmittelbar, dass die Bereitstellung eines PVC-freien Press-on Twist-Off® Gefäßverschlusses den Fachmann vor eine deutlich schwierigere Aufgabe stellt, als die Bereitstellung eines anderen Gefäßverschlusses.

Im Stand der Technik sind für bestimmte Verschlüsse schon PVC-freie Zusammensetzungen beschrieben worden, die aber nicht industriell zum Einsatz gelangt sind.

Zum Beispiel offenbart WO 2009/059788 eine Zusammensetzung mit einem Ethylen-Okten-Copolymer, im Gemisch mit Ethylen-Vinyl-Acetat (EVA) und Polypropylen (PP). In der Praxis haben sich jedoch diese Compounds mit hohen EVA-Anteilen (hier: 40 %) als weniger bevorzugt erwiesen. Die Erfindung umfasst vorzugsweise Compounds mit EVA-Anteilen von weniger als 40 %, und besonders bevorzugt Compounds, die kein EVA enthalten.

Aus der Internationale Patentanmeldung PCT/EP2009/008273 ist eine Zusammensetzung bekannt, die zwei Polymere enthält, nämlich ein Ethylen-Okten-Block-Copolymer (39.1 %) und ein Ethylen-Okten-Random-Copolymer (60 %) mit einer Shore A-Härte von 85 bei einer Shore D-Härte von 25.

Auch diese Rezeptur erfüllt noch nicht alle Anforderungen, insbesondere bei Press-on Twist off®-Verschlüssen, die einer pasteurisierenden oder sogar sterilisierenden Nachbehandlung des gefüllten und verschlossenen Gefäßes standhalten können. Die Erfindung stellt demgegenüber Zusammensetzungen vor, mit denen sich auch anspruchsvolle Anforderungen wie z.B. Dichtungen für Press-on Twist-off® Verschlüsse, deutlich besser erreichen lassen.

Aus JP 2000 239481 ist ein Gefässverschluss mit einer Dichtungseinlage aus einem PVC-freien Polymercompound bekannt, welches ein TPE, ein PP-Homopolymer und ein TPO umfasst.

Aus EP 2 223984 ist ein Gefässverschluss mit einer Dichtungseinlage aus einem PVC-freien Polymercompound bekannt, welches ein PP, ein OBC und EVA (14% VA) umfasst.

### 4. Definitionen

Im Kontext der vorliegenden Erfindung bezeichnet der Ausdruck *"PVC-freie Zusammensetzung"* eine Zusammensetzung, die weniger als 1 Gew.-%, vorzugsweise weniger als 0,5 Gew.-%, noch bevorzugter weniger als 0,1 Gew.-% oder weniger als 1 Gew.-%o und am bevorzugtesten (innerhalb der analytischen Bestimmungsgrenzen) gar kein PVC umfasst (jeweils bezogen auf das Gesamtgewicht der PVC-freien Zusammensetzung). Im Kontext der vorliegenden Erfindung werden als *"PVC-freie Zusammensetzungen"* nur diejenigen Zusammensetzungen betrachtet, die als Dichtungsmasse in Gefäßverschlüssen verwendet werden können. So ist beispielsweise ein Schmelzklebstoff oder ein Rein-Polymer im Kontext der vorliegenden Erfindung keine *"PVC-freie Zusammensetzung",* auch wenn kein PVC darin enthalten ist.

Im Kontext der vorliegenden Erfindung bezeichnet der Ausdruck *"Kunststoff"* ein Material, das mindestens ein synthetisches oder halbsynthetisches Polymer umfasst.

Im Kontext der vorliegenden Erfindung bezeichnet der Ausdruck *"Blockcopolymer"* ein Copolymer, das aus längeren Sequenzen oder Blöcken jedes Monomers besteht (z.B. AAAAAAAAABBBBBBBBBBBB...). Je nach Anzahl der Blöcke spricht man auch von Diblock-, Triblock-, etc. Copolymeren.

Im Kontext der vorliegenden Erfindung bezeichnet der Ausdruck *"Elastomerlegierung"* eine Mischung, die eine Kunststoffmatrix und ein, ggf. darin dispergiertes, Elastomer umfasst. Bei der Kunststoffmatrix kann es sich z.B. um einen Thermoplasten handeln.

Im Kontext der vorliegenden Erfindung bezeichnet der Ausdruck *"Thermoplast"* einen Kunststoff, der sich durch Erwärmen plastisch verformen lässt, sofern die durch Erwärmen erreichte Temperatur innerhalb eines materialspezifischen Temperaturbereichs liegt. Bis zu einer materialspezifischen Obergrenze kann ein Thermoplast reversibel erwärmt und abgekühlt werden, ohne dass eine thermische Zersetzung stattfindet.

Im Kontext der vorliegenden Erfindung bezeichnet der Ausdruck *"Elastomer"* einen formfesten Kunststoff, der sich typischerweise bei Raumtemperatur elastisch verformen lässt. Typischerweise liegt der Glasübergangpunkt eines Elastomers unterhalb der Raumtemperatur. Typischerweise lassen sich Elastomere als solche nicht schmelzen.

### 5. Detaillierte Beschreibung der Erfindung

Generell umfassen die erfindungsgemäßen Zusammensetzungen wenigstens zwei chemisch und physikalisch unterschiedliche Polymere und zusätzlich
- ein drittes, von beiden genannten Polymeren chemisch und physikalisch verschiedenes Polymer;
- die Eignung für eine pasteurisierende, insbesondere auch für eine sterilisierende Nachbehandlung (bei Temperaturen oberhalb 100°C und bis zu 132°C, und/oder
- eine Shore A-Härte zwischen 40 und 95, vorzugsweise 45 bis 90, mehr bevorzugt zwischen 50 und 85 (insbesondere zwischen 70 und 85) sowohl bei 30 min/20°C als auch bei 24h/20°C und vorzugsweise einen Druckverformungsrest DVR (in Prozent, analog ASTM D 395-97, Methode B bei 22h/70°C) zwischen 40 und 95, spezieller zwischen 50 und 90, bevorzugt zwischen 50 und 80, besonders bevorzugt zwischen 50 und 70 und speziell zwischen 50 und 60. Dabei ist es erfindungsgemäß erwünscht, dass der DVR bei 22h/20°C unterhalb 20 liegt und bei 22h/100°C unterhalb 95, speziell unterhalb 90 und besonders bevorzugt zwischen 80 und 90 liegt.

### 5.1 Bevorzugte Ausführungsformen mit 3 Polymeren

Erfindungsgemäss ist die PVC-freie Dichtungsmasse eine Mischung, die mindestens drei unterschiedliche Kunststoffe umfasst, welche nachfolgend als Kunststoff 1, Kunststoff 2 und Kunststoff 3 bezeichnet werden.

Die erfindungsgemäße PVC-freie Zusammensetzung umfasst dabei:
- Kunststoff 1
- Kunststoff 2
- Kunststoff 3
- optional Kunststoff 4,
- optional mindestens einen flüssigen Bestandteil
- optional mindestens ein Gleitmittel
- optional mindestens einen Stabilisator,
- optional mindestens ein Pigment, und/oder
- optional mindestens einen Füllstoff

Der Kunststoff 1 umfasst ein im wesentlichen nicht elastisches, thermoplastisches Polymer, nämlich Polypropylen (PP).

Die anderen Kunststoffe sind dann elastische thermoplastische Polymere bzw. thermoplastische Elastomere.

Üblicherweise unterscheidet man zwei Arten von elastischen Thermoplasten: (A) Blockcopolymere und (B) Elastomerlegierungen.

Im Kontext der vorliegenden Erfindung sind die Begriffe "Kunststoff 1", "Kunststoff 2" und "Kunststoff 3" weit zu verstehen. Kunststoff 1, Kunststoff 2 und Kunststoff 3 können Reinstoffe (z.B. ein Blockcopolymer, ein Homopolymer etc.) oder Mischungen (z.B. ein Polymerblend, eine Polymerlegierung etc.) sein. Ist Kunststoff 1, 2 und/oder 3 ein Polymerblend oder eine Polymerlegierung, umfasst die erfindungsgemäße PVC-freie Zusammensetzung mehr als drei verschiedene Polymerarten.

Es hat sich nun überraschenderweise gezeigt, dass sich das der vorliegenden Erfindung zu Grunde liegende Problem in bevorzugten Ausführungsformen der Erfindung durch eine PVC-freie Zusammensetzung lösen lässt, die Kunststoff 1, Kunststoff 2 und Kunststoff 3 umfasst, die gezielt aus der Vielzahl der genannten, bekannten Kunststoffe passend ausgewählt werden.

Erfindungsgemäss handelt es sich bei **Kunststoff 1** um ein Polymer (bzw. ein Polymergemisch), das in erster Linie die Eigenschaften eines Thermoplasts aufweist und
einen klassischen Thermoplasten, nämlich Polypropylen umfasst.

Im Gegensatz dazu handelt es sich bei **Kunststoff 2** um ein thermoplastisches Elastomer. In einer besonders bevorzugten Ausführungsform ist Kunststoff 3 ein Material wie z.B. SEBS.

Erfindungsgemäß handelt es sich bei **Kunststoff 3** um einen elastischen Thermoplasten, der einen ausgewogenen Kompromiss zwischen einem Elastomer und einem Thermoplast darstellt, nämlich ein POE.

In einer bevorzugten Ausführungsform der Erfindung umfasst die erfindungsgemäße Zusammensetzung keine Compounds, deren polymere Hauptbestandteile aus 39 - 40 % Ethylen-Okten-Block-Copolymer und 45 - 60 % Ethylen-Okten-Random-Copolymer bestehen, insbesondere wenn zusätzlich ein Gehalt von bis zu 10 % PP vorliegt.

In bestimmten Ausführungsformen der Erfindung ist der Polymer-Hauptbestandteil ein thermoplastisches Elastomer oder ein elastischer Thermoplast, insbesondere ausgewählt aus SEBS, Propylen-basierenden Elastomeren und Terpolymeren.

Eine bevorzugte Ausführungsform der vorliegenden Erfindung ist schematisch in Abbildung 1 dargestellt.

### 5.1.1 Beziehungen zwischen Kunststoff 1, Kunststoff 2 und Kunststoff 3

Die Wahl der erfindungsgemäßen Kunststoffen 1, 2 und 3 kann je nach Anwendungsbereich zum Teil erheblich differieren. Dennoch gilt unabhängig von der Art des Gefäßverschlusses mindestens eine der nachfolgend aufgeführten Beziehungen zwischen den Kunststoffen 1, 2 und 3.

In bevorzugten Ausführungsformen der Erfindung gelten mehrere oder gar alle der folgenden Beziehungen:
Mindesttemperatur, bei der eine plastische Verformung möglich ist:
   Kunststoff 1 < Kunststoff 3 < Kunststoff 2
Glastemperatur (T_{g}),
   Kunststoff 1 > Kunststoff 3 > Kunststoff 2
Shore A Härte,
   Kunststoff 1 > Kunststoff 3 > Kunststoff 2
Elastizitätsmodul
   Kunststoff 1 > Kunststoff 3 > Kunststoff 2
Druckverformungsrest (22h / 70 °C)
   Kunststoff 1 > Kunststoff 3 > Kunststoff 2

### 5.1.2 Wahl von Kunststoff 1, Kunststoff 2 und Kunststoff 3

Kunststoff 1, Kunststoff 2 und Kunststoff 3 sind vorzugsweise bekannte, handelsübliche Kunststoffe. Anhand obiger Angaben zu Druckverformungsrest, Shore A Härte, Glastemperatur etc. ist der Fachmann in der Lage, geeignete, kommerziell erhältliche Kunststoffe, Polymere, Polymerlegierungen etc. zu identifizieren.
Als Kunststoff 1 kommen zum Beispiel folgende Handelsprodukte in Frage: Metallocenkatalysiertes Polypropylen, wie etwa Metocene® HM.
Als Kunststoff 2 kommen unter anderem folgende Handelsprodukte in Frage: SEBS, z.B. Taipol® oder Kraton®; OBC's wie z.B. Infuse®.
Als Kunststoff 3 kommen unter anderem folgende Handelsprodukte in Frage:elastische Thermoplasten, nämlich POE's wie etwa Engage®, Vistamaxx®.

### 5.1.3 Mengenangaben

Die Gewichtsanteile von Kunststoff 1, 2 und 3 in der erfindungsgemäßen PVC-freien Zusammensetzung können je nach Verwendung variieren.

Typischerweise liegt der Gewichtsanteil von **Kunststoff 1** in einem Bereich von oberhalb 0 Gew.-% bis 80 Gew.-%, bezogen auf das Gesamtgewicht der erfindungsgemäßen PVC-freien Zusammensetzung. Vorzugsweise liegt der Gewichtsanteil von Kunststoff 1 in einem Bereich von 10 Gew.-% bis 70 Gew.-%, bezogen auf das Gesamtgewicht der erfindungsgemäßen PVC-freien Zusammensetzung. Am bevorzugtesten liegt der Gewichtsanteil von Kunststoff 1 in einem Bereich von 10 Gew.-% bis 50 Gew.-%, bezogen auf das Gesamtgewicht der erfindungsgemäßen PVC-freien Zusammensetzung.

Typischerweise liegt der Gewichtsanteil von **Kunststoff 2** in einem Bereich von oberhalb 0 Gew.-% bis fast 100 Gew.-%, spezieller bis 70 Gew.-% bezogen auf das Gesamtgewicht der erfindungsgemäßen PVC-freien Zusammensetzung. Vorzugsweise liegt der Gewichtsanteil von Kunststoff 2 in einem Bereich von 10 Gew.-% bis 50 Gew.-%, bezogen auf das Gesamtgewicht der erfindungsgemäßen PVC-freien Zusammensetzung. Am bevorzugtesten liegt der Gewichtsanteil von Kunststoff 2 in einem Bereich von 20 Gew.-% bis 35 Gew.-%, bezogen auf das Gesamtgewicht der erfindungsgemäßen PVC-freien Zusammensetzung.

Typischerweise liegt der Gewichtsanteil von **Kunststoff 3** in einem Bereich von 10 Gew.-% bis 50 Gew.-%, bezogen auf das Gesamtgewicht der erfindungsgemäßen PVC-freien Zusammensetzung. Vorzugsweise liegt der Gewichtsanteil von Kunststoff 3 in einem Bereich von 15 Gew.-% bis 40 Gew.-%, bezogen auf das Gesamtgewicht der erfindungsgemäßen PVC-freien Zusammensetzung. Am bevorzugtesten liegt der Gewichtsanteil von Kunststoff 3 in einem Bereich von 20 Gew.-% bis 40 Gew.-%, bezogen auf das Gesamtgewicht der erfindungsgemäßen PVC-freien Zusammensetzung.

Der Fachmann versteht, dass die Summe der Gew.-% von Kunststoff 1, Kunststoff 2 und Kunststoff 3 höchstens 100-Gew.-% betragen kann. Beträgt die Summe der Gew.-% von Kunststoff 1, Kunststoff 2 und Kunststoff 3 weniger als 100-Gew.-% umfasst die PVC-freien Zusammensetzung weitere Bestandteile.

### 5.1.4 Weitere optionale Bestandteile

Optional kann die erfindungsgemäße Zusammensetzung einen flüssigen Bestandteil umfassen wie Weißöl, insbesondere bei Compounds, die ein thermoplastisches Elastomer wie SEBS umfassen. Solche Compounds können sterilisierbar sein, eignen sich aber weniger für fettige Füllgüter.

Weiterhin kann die erfindungsgemäße Zusammensetzung Gleitmittel umfassen. Zweck des Gleitmittels ist die Verringerung des Aufdrehwiderstands.

Daneben sind gegebenenfalls übliche Komponenten wie Stabilisatoren, Pigmente, Füllstoffe und dergleichen in üblichen kleinen Anteilen vorgesehen.

### 5.1.5 Ausführungsbeispiele

**Ausführungsbeispiel 1**

| | | |
|---|---|---|
| Kunststoff 1 | Polypropylen | 10 Gew.-% |
| Kunststoff 2 | Olefin Block Copolymer | 48,8 Gew.-% |
| Kunststoff 3 | Polyolefinelastomer | 40 Gew.-% |
| Gleitmittel | | 0,6 Gew.-% |
| Stabilisator | | 0,3 Gew.-% |
| Pigment | | 0,3 Gew.-% |

Shore-A Härte (24 h / 20 °C) = 78
DVR (22 h / 70 °C) = 59
Diese Dichtungsmasse ist für fetthaltige Füllgüter hervorragend geeignet und pasteurisierbar, aber nicht sterilisierbar.. Sie kann bei Gegendruck bis 98°C, ohne Gegendruck bis max. 105°C eingesetzt werden.

**Ausführungsbeispiel 2**

| | | |
|---|---|---|
| Kunststoff 1 | Polypropylen | 26 Gew.-% |
| Kunststoff 2 | SEBS | 27 Gew.-% |
| Kunststoff 3 | Polyolefinelastomer | 38 Gew.-% |
| Haftvermittler | Polyester | 8 Gew.-% |
| Gleitmittel | | 0,5 Gew.-% |
| Stabilisator | | 0,2 Gew.-% |
| Pigment | | 0,3 Gew.-% |

Diese Dichtungsmasse eignet sich für PT-Kappen. Sie ist für fettige Füllgüter geeignet und sterilisierbar.
Shore A (24h / 20 °C) = 78
DVR (22 h/ 70 °C) = 69

**Ausführungsbeispiel 3**

| | | |
|---|---|---|
| Kunststoff 1 | Polypropylen | 35 Gew.-% |
| Kunststoff 2 | Olefin- Block -Copolymer + SEBS | 44 Gew.-% |
| Kunststoff 3 | Polyolefinelastomer | 20 Gew.-% |
| Gleitmittel | | 0,5 Gew.-% |
| Stabilisator | | 0,5 Gew.-% |

Shore A (24h / 20 °C) = 90
Diese Ausführungsform ist für fettige Füllgüter geeignet und sterilisierbar. Sie eignet sich für PT-Kappen.

Die Eignung zur Sterilisierbarkeit lässt sich am Dichtungsmaterial durch entsprechende Versuche ermitteln.

Eine Voraussage dieser Eignung ist mittels der bekannten Dynamisch-Mechanischen Thermo-Analyse (DMTA) möglich. Grundsätzlich wird dazu die Aufheizkurve für den Phasenwinkel (tan) delta bestimmt, deren Wendepunkt ausreichend (meist wenigstens 10 °C) oberhalb der vorgesehenen Sterilisationstemperatur liegen soll.

## Patentansprüche

1. Gefäßverschluss aus Metall oder Kunststoff für ein Gefäß zur Aufnahme von Nahrungsmitteln oder Getränken, mit einer Dichtungseinlage aus einem Dichtungsmaterial, das wenigstens ein Polymer im Gemisch mit weiteren Substanzen umfasst, wobei
- das Dichtungsmaterial kein PVC und im wesentlichen keine vernetzten Polymere enthält;
- das Dichtungsmaterial im wesentlichen frei von bei Anwendungstemperatur flüssigen Bestanteilen ist;
- die Dichtungseinlage bei Temperaturen bis zu 98°C pasteurisierbar ist;
- das Dichtungsmaterial eine Shore A-Härte zwischen 40 und 95 aufweist, und
- das Dichtungsmaterial wenigstens drei verschiedene Polymere umfasst, von denen das erste Polypropylen ist, während das zweite Polymer ein POE und das dritte Polymer ein thermoplastisches Elastomer ist.

2. Gefäßverschluss gemäß Anspruch 1, bei dem die Dichtungseinlage im Gefäßverschluss so angeordnet ist, dass sie im Schließzustand dichtend an der Öffnung des Gefäßes anliegt, wobei der Gefäßverschluss vorzugsweise aus Metall besteht.

3. Gefäßverschluss nach einem der Ansprüche 1 oder 2, **dadurch gekennzeichnet, dass** der Gefäßverschluss einem Innendurchmesser der Gefäßöffnung von mehr als 2,5 cm, vorzugsweise mehr als 3 cm, mehr bevorzugt von mindestens 3,5 cm, besonders bevorzugt von mindestens 3,8 cm und ggf. von mehr als 4 cm entspricht.

4. Gefäßverschluss nach einem der Ansprüche 1 bis 3, **dadurch gekennzeichnet, dass** der Gefäßverschluss als Schraubdeckel für eine Flasche, ein Glas oder dergleichen ausgebildet ist.

5. Gefäßverschluss nach einem der Ansprüche 1 bis 4, bei dem der Gefäßverschluss ein Nockendrehverschluss, ein Press-on Twist-off® Verschluss, ein Stülpdeckel, ein crimp-on bzw. Einmalverschluss (z.B. Pano AK) oder ein anrollbarer Metallverschluss ist.

6. Gefäßverschluss nach einem der vorstehenden Ansprüche, **dadurch gekennzeichnet, dass** die Dichtungseinlage als vorzugsweise ringförmige oder kreisscheibenförmige Inneneinlage auf der Innenfläche und bei Press-on Twist-off® Verschlüssen auch auf der Schürze des Gefäßverschlusses ("konturierter Ring") ausgebildet ist.

7. Gefäßverschluss nach einem der vorstehenden Ansprüche, **dadurch gekennzeichnet, dass** das Dichtungsmaterial so ausgebildet ist, dass die Dichtungseinlage bei einer Wärmebehandlung (mit oder ohne Druck) des gefüllten Gefäßes zwecks Sterilisation (oberhalb 98°C, bevorzugt oberhalb 105°C, besonders bevorzugt oberhalb 120°C und speziell zwischen 121°C und 132°C) einsetzbar ist.

8. Gefäßverschluss nach einem der vorstehenden Ansprüche, **dadurch gekennzeichnet, dass** der Gefäßverschluss im Schließzustand eine GasBarrierewirkung, eine Vakuumsretention und/oder eine Überdruckventilwirkung aufweist.

9. Gefäßverschluss nach einem der vorstehenden Ansprüche, wobei das Dichtungsmaterial nicht mehr als 10%, besonders bevorzugt nicht mehr als 5% von bei Anwendungstemperatur flüssigen Bestandteilen enthält, und speziell innerhalb der Bestimmungsgrenzen keine bei Anwendungstemperatur flüssigen Bestandteile enthält.

10. Gefäßverschluss nach Anspruch 9, wobei das Dichtungsmaterial weniger als 4% und vorzugsweise gar keine Streckmittel (insbesondere Weißöl) und vorzugsweise keine Weichmacher, insbesondere keine Phthalate, enthält.

11. Gefäßverschluss nach einem der vorstehenden Ansprüche, bei dem die Shore A Härte des Dichtungsmaterials zwischen 40 und 95 liegt und das Dichtungsmaterial beim Druckverformungstest analog ASTM D395-97 Methode B bei 22 h/70°C einen Druckverformungsrest (DVR) von 25-90%, vorzugsweise von 55-90%, zeigt.

12. Gefäßverschluss nach einem der vorstehenden Ansprüche, **dadurch gekennzeichnet, dass** das Dichtungsmaterial zwischen 0,1 und 80%, vorzugsweise zwischen 20 und 60 % und besonders bevorzugt zwischen 40 und 50%, wenigstens eines Block-Copolymers enthält, wobei das Block-Copolymer vorzugsweise ein Interpolymer von Ethylen mit mindestens einem C₃-C₂₀-alpha-Olefin und insbesondere aus Ethylen und einem Alken, insbesondere ausgewählt aus Propen, Buten, Hexen und Okten, und besonders bevorzugt Okten ausgebildet ist und das Block-Copolymer vorzugsweise eine Dichte von 0,80 bis 1,1 g/cm³ aufweist und einen Schmelzindex (MFI) von 0,01 g/10 min bis 1000 g/10 min, insbesondere einen MFI von 1 g/10 min bis 100 g/10 min, bei einer Auflage von 5 kg bei 190°C aufweist oder ein Copolymer von Ethylen mit einem C₃-C₂₀-alpha-Olefin, gegebenenfalls in Kombination mit anderen ungesättigten Monomeren, ist.

13. Gefäßverschluss nach einem der Ansprüche 11 und 12, **dadurch gekennzeichnet, dass** das Dichtungsmaterial zwischen 0,1 % und 80%, vorzugsweise zwischen 20 und 60%, besonders bevorzugt zwischen 40 und 50% wenigstens eines random-Copolymers enthält, wobei das random-Copolymer vorzugsweise ein lineares Interpolymer von Ethylen und einem C₃-C₂₀-alpha-Olefin oder ein branched-Interpolymer von Ethylen und einem C₃-C₂₀-alpha-Olefin ist, und besonders bevorzugt eine Dichte von 0,80 bis 1,1 g/cm³ und vorzugsweise einen Schmelzindex (MFI) von 0.15 g/10 min bis 100 g/10 min aufweist.

14. Gefäßverschluss nach einem der Ansprüche 11 bis 13, **dadurch gekennzeichnet, dass** das random-Copolymer zwei Alkene, insbesondere ausgewählt aus Ethylen, Propen, Buten, Hexen und Okten, und besonders Ethylen und Okten umfasst, wobei vorzugsweise wenigstens ein Co-Polymer mittels Metallocenkatalyse hergestellt wurde.

15. Gefäßverschluss nach einem der vorstehenden Ansprüche, **dadurch gekennzeichnet, dass** das Dichtungsmaterial eine Shore A Härte von 65 bis 90 und bevorzugt eine Shore A Härte von 75 bis 90 hat.

16. Gefäßverschluss nach einem der vorstehenden Ansprüche, **dadurch gekennzeichnet, dass** der Druckverformungsrest des Dichtungsmaterials bei 22 h/ 70°C zwischen 55% und 75% und insbesondere bei etwa 70% liegt.

17. Gefäßverschluss gemäß einem der vorstehenden Ansprüche, bei dem das Dichtungsmaterial bezogen auf sein Gesamtgewicht weniger als 30 Gew.-%, vorzugsweise weniger als 20 Gew.-%, mehr bevorzugt weniger als 10 Gew.-%, besonders bevorzugt weniger als 5 Gew.-% und speziell gar kein vernetztes Polymer enthält.

18. Gefäßverschluss nach einem der vorstehenden Ansprüche mit einem Gehalt an einem Polyester im Dichtungsmaterial.

19. Verwendung eines Gefäßverschlusses gemäß einem der vorstehenden Ansprüche, bei dem das Dichtungsmaterial im wesentlichen frei von bei Anwendungstemperatur flüssigen Bestandteilen (insbesondere Ölen) ist, für fetthaltige Füllgüter, bei dem die Migration von Bestandteilen des Dichtungsmaterials in das Füllgut den Vorschriften der Verordnung (EG) 1935/2005, vorzugsweise auch der Verordnung (EG) 2023/2006, und den Richtlinien 2002/72/EG und 2007/19/EG und insbesondere der Verordnung (EU 10/2011) entspricht.

20. Dichtungseinlage, umfassend ein Dichtungsmaterial wie in einem der Ansprüche 1 bis 18 definiert.

21. Gefäß, insbesondere Schraubdeckelglas, für Getränke oder Nahrungsmittel, mit einem Gefäßverschluss gemäß einem der vorstehenden Ansprüche.

## Claims

1. Container closure made of metal or plastic for a container for accommodating food or beverages, with a sealing insert made of a sealing material comprising at least one polymer mixed with other substances, whereby
- the sealing material does not contain PVC and essentially no cross-linked polymers,
- the sealing material is essentially free from components that are liquid at application temperature;
- the sealing insert can be pasteurized at temperatures of up to 98°C;
- the sealing material measures between 40 and 95 on the Shore A Hardness scale, and
- the sealing material comprises at least three different polymers, the first being polypropylene, while the second polymer is a POE, and the third polymer is a thermoplastic elastomer.

2. Container closure according to claim 1, where the sealing insert in the container closure is arranged in such a way that in the closed state it seals the opening of the container, wherein the container closure preferably is made of metal.

3. Container closure according to one of claims 1 or 2, **characterized in that** the container closure corresponds to an inner diameter of the container closure of more than 2.5 cm, preferably of more than 3 cm, more preferably of at least 3.5 cm, particularly preferably of at least 3.8 cm and possibly of more than 4 cm.

4. Container closure according to one of claims 1 to 3, **characterized in that** the container closure is configured as a screw cover for a bottle, glass or the like.

5. Container closure according to one of claims 1 to 4, where the container closure is a cam-screw cap, a Press-On Twist-Off^{®} closure, a snap-on lid, a crimp-on or disposable cap (e.g. Pano AK) or a roll-on metal closure.

6. Container closure according to one of the above claims, **characterized in that** the sealing insert is designed as an inner insert on the inner surface which preferably is configured in a ring- or circular disc-shape, and, in the case of Press-On Twist-Off^{®} closures, also on the skirt of the container closure ("contoured ring").

7. Container closure according to one of the above claims, **characterized in that** the sealing material is configured in such a way that the sealing insert can be used during heat treatment (with or without pressure) of the filled container for the purpose of sterilization (above 98°C, preferably above 105°C, particularly preferably above 120°C and especially between 121°C and 132°C).

8. Container closure according to one of the above claims, **characterized in that** the container closure in the closed state has a gas barrier effect, a vacuum retention and/or an relief valve effect.

9. Container closure according to one of the above claims, whereby the sealing material contains no more than 10%, particularly preferably no more than 5% of components which are liquid at application temperature, and especially does not contain components which are liquid at application temperature within the determination limits.

10. Container closure according to claim 9, whereby the sealing material contains less than 4% and preferably no diluent (in particular white mineral oil), and preferably contains no plasticizers, in particular no phthalates.

11. Container closure according to one of the above claims, where the sealing material measures between 40 and 95 on the Shore A Hardness scale and in the compression set test according to ASTM D395-97 method B at 22 h/70°C, the sealing material shows a compression set (CS) of 25-90%, preferably 55-90%.

12. Container closure according to one of the above claims, **characterized in that** the sealing material contains between 0.1 and 80%, preferably between 20 and 60% and particularly preferably between 40 and 50%, of at least one block copolymer, whereby the block copolymer preferably is an interpolymer of ethylene with at least one C₃-C₂₀ alpha-olefin and in particular ethylene and an alkene, in particular selected from propene, butene, hexene and octene and specifically octene, and the block copolymer preferably has a density of 0.80 to 1.1 g/cm³ and a melt flow index (MFI) of 0.01 g/10 min to 1000 g/10 min, in particular an MFI of 1 g/10 min to 100 g/10 min, with a bearing of 5 kg at 190°C, and a copolymer of ethylene with a C₃-C₂₀-alpha-olefin, possibly in combination with other unsaturated monomers.

13. Container closure according to one of claims 11 and 12, **characterized in that** the sealing material contains between 0.1% and 80%, preferably between 20 and 60%, particularly preferably between 40 and 50% of at least one random copolymer, whereby the random copolymer preferably is a linear interpolymer of ethylene and a C₃-C₂₀ alpha-olefin or a branched interpolymer of ethylene and a C₃-C₂₀ alpha-olefin, and particularly preferably has a density of 0.80 to 1.1 g/cm³ and preferably a melt flow index (MFI) of 0.15 g/10 min to 100 g/10 min.

14. Container closure according to one of claims 11 to 13, **characterized in that** the random copolymer comprises two alkenes, in particular selected from ethylene, propene, butene, hexene and octene, and in particular ethylene and octene, whereby preferably at least one copolymer was produced by means of metallocene catalysis.

15. Container closure according to one of the above claims, **characterized in that** the sealing material measures between 65 and 90 on the Shore A Hardness scale and preferably between 75 and 90 on the Shore A Hardness scale.

16. Container closure according to one of the above claims, **characterized in that** the compression set of the sealing material at 22 h/ 70°C is between 55% and 75% and in particular at about 70%.

17. Container closure according to one of the above claims, where the sealing material, based on its total weight, contains less than 30% by weight, particularly preferably less than 20% by weight, particularly preferably 10% by weight, particularly preferably less than 5% by weight and specifically no cross-linked polymer at all.

18. Container closure according to any of the above claims, with a content of a polyester in the sealing material.

19. Use of a container closure in accordance with one of the above claims, where the sealing material is essentially free of components that are liquid at application temperature (in particular oils), for fatty fillers, where the migration of components of the sealing material into the fillers complies with the regulations of Regulation (EC) No 1935/2005, preferably also Regulation (EC) No 2023/2006, and Directives 2002/72/EC and 2007/19/EC, and preferably Regulation (EU) No 10/2011.

20. Sealing insert, comprising a sealing material as defined in any one of claims 1 to 18.

21. Container, in particular screw cover jar, for beverages or food, with a container closure according to one of the above claims.

## Revendications

1. Fermeture de récipient en métal ou en matière plastique pour un récipient destiné à la réception de denrées alimentaires ou de boissons avec une garniture d'étanchéité réalisée à partir d'un matériau d'étanchéité qui comprend au moins un polymère en mélange avec d'autres substances
- le matériau d'étanchéité ne contenant aucun PVC et essentiellement aucun polymère réticulé,
- le matériau d'étanchéité étant essentiellement exempt de constituants liquides à la température d'application,
- la garniture d'étanchéité pouvant être pasteurisée à des températures allant jusqu'à 98°C,
- le matériau d'étanchéité ayant une dureté Shore A entre 40 et 95, et
- le matériau d'étanchéité comprenant au moins trois polymères différents, dont le premier étant du polypropylène, le deuxième polymère étant un POE, et le troisième polymère étant un élastomère thermoplastique.

2. Fermeture de récipient selon la revendication 1, pour laquelle la garniture d'étanchéité est agencée dans la fermeture de récipient de manière à fermer de manière étanche l'orifice du récipient à l'état de fermeture, la fermeture de récipient étant de préférence en métal.

3. Fermeture de récipient selon l'une des revendications 1 ou 2, **caractérisée en ce que** la fermeture de récipient correspond à un diamètre intérieur de l'ouverture supérieur à 2,5 cm, de préférence supérieur à 3 cm, de manière davantage préférée à au moins 3,5 cm, de manière particulièrement préférée à au moins 3,8 cm et éventuellement supérieur à 4 cm.

4. Fermeture de récipient selon l'une des revendications 1 à 3, **caractérisée en ce que** la fermeture de récipient est conçue comme un couvercle à vis pour une bouteille, un verre ou similaire.

5. Fermeture de récipient selon l'une des revendications 1 à 4, pour laquelle la fermeture de récipient est une fermeture quart de tour, une fermeture Press-On Twist-Off®, un couvercle cloche, une fermeture à sertir ou à usage unique (par exemple Pano AK) ou une fermeture métallique à enroulement.

6. Fermeture de récipient selon l'une des revendications précédentes, **caractérisée en ce que** la garniture d'étanchéité est configurée comme une garniture intérieure de préférence en forme d'anneau ou de disque circulaire sur la surface intérieure et, dans le cas de fermetures Press-On Twist-Off®, également sur le tablier de la fermeture de récipient (« anneau profilé »).

7. Fermeture de récipient selon l'une des revendications précédentes, **caractérisée en ce que** le matériau d'étanchéité est conçu de sorte que la garniture d'étanchéité peut être utilisée lors d'un traitement thermique (avec ou sans pression) du récipient rempli à des fins de stérilisation (supérieur à 98°C, de préférence supérieur à 105°C, de manière particulièrement préférée supérieur à 120°C et spécialement entre 121°C et 132°C).

8. Fermeture de récipient selon l'une des revendications précédentes, **caractérisée en ce que** la fermeture présente, à l'état de fermeture, un effet de barrière aux gaz, une rétention sous vide et/ou un effet de vanne de surpression.

9. Fermeture de récipient selon l'une des revendications précédentes, le matériau d'étanchéité ne contenant pas plus de 10%, de manière particulièrement préférée pas plus de 5% de constituants liquides à la température d'application, et spécialement dans les limites de détermination ne contentant aucun constituant liquide à la température d'application.

10. Fermeture de récipient selon la revendication 9, le matériau d'étanchéité contenant moins de 4% et de préférence aucun diluant (en particulier de l'huile blanche) et de préférence aucun plastifiant, notamment aucun phtalate.

11. Fermeture de récipient selon l'une des revendications précédentes, pour laquelle la dureté Shore A du matériau d'étanchéité se situe entre 40 et 95 et le matériau d'étanchéité présente lors du test de déformation sous pression selon ASTM D395-97, méthode B, à 22 h/70°C, une déformation permanente de 25-90%, de préférence de 55-90%.

12. Fermeture de récipient selon l'une des revendications précédentes, **caractérisée en ce que** le matériau d'étanchéité contenant entre 0,1 et 80%, de préférence entre 20 et 60% et de manière particulièrement préférée entre 40 et 50%, au moins un copolymère à blocs, le copolymère à blocs étant de préférence un interpolymère d'éthylène avec au moins une alpha-oléfine en C₃-C₂₀ et, notamment formé d'éthylène et d'un alcène, notamment choisi parmi le propène, le butène, l'hexène et l'octène, et de manière particulièrement préférée d'octène, et le copolymère à blocs présentant de préférence une densité de 0,80 à 1,1 g/cm³ et un indice de fusion (MFI) de 0,01 g/10 min à 1000 g/10 min, notamment un MFI de 1 g/10 min à 100 g/10 min, avec une charge de 5 kg à 190°C ou étant un copolymère d'éthylène avec une alpha-oléfine en C₃-C₂₀ éventuellement en combinaison avec d'autres monomères insaturés.

13. Fermeture de récipient selon l'une des revendications 11 et 12, **caractérisée en ce que** le matériau d'étanchéité contient entre 0,1% et 80%, de préférence entre 20 et 60%, de manière particulièrement préférée entre 40 et 50% au moins un copolymère aléatoire, le copolymère aléatoire étant de préférence un interpolymère linéaire d'éthylène et d'une alpha-oléfine C₃-C₂₀ ou un interpolymère ramifié d'éthylène et d'une alpha-oléfine C₃-C₂₀ et présentant de manière particulièrement préférée une densité de 0,80 à 1,1 g/cm³ et de préférence un indice de fusion (MFI) de 0,15 g/10 min à 100 g/10 min.

14. Fermeture de récipient selon l'une des revendications 11 à 13, **caractérisée en ce que** le copolymère aléatoire comprend deux alcènes, notamment choisis parmi l'éthylène, le propène, le butène, l'hexène et l'octène, et en particulier de l'éthylène et de l'octène, au moins un copolymère étant de préférence produit par catalyse métallocène.

15. Fermeture de récipient selon l'une des revendications précédentes, **caractérisée en ce que** le matériau d'étanchéité a une dureté Shore A de 65 à 90 et de préférence une dureté Shore A de 75 à 90.

16. Fermeture de récipient selon l'une des revendications précédentes, **caractérisée en ce que** la déformation permanente du matériau d'étanchéité à 22 h/ 70°C se situe entre 55% et 75% et notamment à environ 70%.

17. Fermeture de récipient selon l'une des revendications précédentes, pour laquelle le matériau d'étanchéité, sur la base de son poids total, est inférieur à 30% en poids, de préférence inférieur à 20% en poids, de manière davantage préférée inférieur à 10% en poids, de manière particulièrement préférée inférieur à 5% en poids et spécialement ne contient aucun polymère réticulé.

18. Fermeture de récipient selon l'une des revendications précédentes, avec une teneur d'un polyestre dans le matériau d'étanchéité.

19. Utilisation d'une fermeture de récipient selon l'une des revendications précédentes, pour laquelle le matériau d'étanchéité est essentiellement exempt de constituants liquides à la température d'application (en particulier d'huiles), pour les matières grasses, pour laquelle la migration des constituants du matériau d'étanchéité dans la matière est conforme aux dispositions du Règlement (CE) N° 1935/2005, de préférence également au Règlement (CE) N° 2023/2006, et aux Directives 2002/72/CE et 2007/19/CE et en particulier au Règlement (UE) N° 10/2011.

20. Garniture d'étanchéité comprenant un matériau d'étanchéité tel que défini dans l'une des revendications 1 à 18.

21. Récipient, notamment un verre à couvercle à vis, pour boissons ou denrées alimentaires, avec une fermeture de récipient selon l'une des revendications précédentes.
